# EUROPEAN PATENT SPECIFICATION

(11) **EP 0 501 049 B1**
(45) Date of publication and mention of the grant of the patent: **11.05.1994**
(21) Application number: 91301514.5
(22) Date of filing: 26.02.1991
(51) Int. Cl.: G01J 5/04

(54) **Apparatus for measuring temperatures inside process vessels containing a hostile environment**
Vorrichtung zur Messung von Temperaturen innerhalb feindliche Umgebung enthaltenden Verarbeitungsgefässen
Dispositif de mesure de températures à l'intérieur de récipients de transformation contenant un milieu hostile

(43) Date of publication of application: 02.09.1992
(73) Proprietor: TEXACO DEVELOPMENT CORPORATION, White Plains, New York 10650 (US)
(72) Inventor: Leininger, Thomas Frederick, Walnut, CA 91789 (US); Cary, Richard Dennis, Ontario, CA 91762 (US); Zachariou, Gus, Long Beach, CA 90808 (US)
(74) Representative: Ben-Nathan, Laurence Albert

(56) References cited:
- US-A- 4 400 097
- US-A- 4 411 533

## Description

### BACKGROUND OF THE INVENTION

### Field of the Invention

This invention is generally concerned with means for measuring temperature in gas filled enclosures or conduits. More specifically, it is concerned with an improvement for a system involving a pyrometer which is used to measure elevated temperatures in reaction chambers. An example of such chambers is in generators used for the production of synthesis gas via the gasification of hydrocarbon fuels in a partial oxidation process.

A gasification process may include the gasification of gaseous, liquid or solid hydrocarbons containing varying concentrations of ungasifiable ash material. The gasification reactions are carried out at high temperatures and pressures within a reactor vessel which is lined internally with successive courses of refractory material. Depending upon the composition of the hydrocarbon feedstock, the hot gases produced in such a process normally contain entrained particles of unconverted carbon, reacting hydrocarbon fuel, molten ash, and/or non-molten high melting temperature ash material. The interior refractory wall of the reaction chamber used in such a process tends to develop a layer of molten ash which runs down the vertical wall towards a bottom exit.

In a gasification process such as described above, a reliable measurement of reaction chamber temperature is very important. The reliability of the temperature measurement affects many aspects of the gasification operation including control of the reactions, safe process operation, control of the rate of deterioration of the refractory lining and control of the viscosity of the molten ash in order to ensure adequate ash removal through the bottom of the reactor.

With respect to temperature measurement, radiation pyrometers have been used to measure the temperatures of hot surfaces and hot atmospheres such as the interior of gasification reactors or the like. Radiation pyrometric techniques involve measuring the thermal radiation emitted by the hot environment and inferring the temperature from a knowledge of the radiation laws and a knowledge of, or justifiable assumptions about, the emitting characteristics of the surfaces and/or gases being measured.

### Description of the Prior Art

The solid state radiation detectors used to measure the radiation are fairly delicate and need to be isolated from the hostile atmospheres whose temperatures are being measured. The isolation normally takes the form of a sight glass window and a gas purged sight hole formed through the vessel shell and lining. This provides the detector with a clear optical line-of-sight into the vessel interior.

One weakness of the above method of isolation is that the purged sight hole is subject to becoming blocked whenever the atmosphere being measured contains molten particles. Under such conditions the molten particles will be frozen by the cooler purge gas in the neighborhood of the purged sight hole; and the optical sight path will gradually become occluded by the accumulating material.

One prior art patent addressed to the problem of maintaining an open line-of-sight between a pyrometer and a high temperature reactor is U.S. Patent No. 4,411,533. The invention comprises a projecting shelf formed integral with the wall and top of the sight hole for diverting molten material away from the top of the hole, and a sloped recess formed integral with the bottom of the sight hole for draining molten material away from the bottom of the hole.

Several difficulties may arise with the above system in practice. When the produced reaction gases carry a high concentration of molten particles, the large volume of molten material running down the interior vertical wall of the vessel overwhelms the capacity of the projecting shelf to divert the material away from the sight hole. In addition, if the molten material is chemically aggressive towards the refractory material used to fabricate the projecting shelf, the shelf will be attacked and will wear away.

However, the chief difficulty arises because the purge gas, which protects the optical window and sight hole from the high temperature gases inside the reaction chamber, tends to also cool the projecting shelf. As a result, the shelf becomes a cold spot which promotes the freezing of any molten material coming in contact with it. Eventually enough frozen material accumulates so that the entire sight hole becomes occluded.

The features of the first part of the appended claim 1 are, in combination, known from the U.S. Patent No. 4,400,097. The authors disclose a radiation measuring apparatus including a pyrometer. The latter receives radiation from a gasifier or reactor by way of an elongated measuring duct which is recessed in the refractory lining of the vessel. The measuring duct provides a safety chamber for the prevention of gas leaks from the vessel. The safety chamber is a hermetic housing having two optical windows which are protected from dust and condensation by a purge flow of nitrogen in an inner optical tube. Steam flowing in a second, outer optical tube is used to maintain a clear opening into the reactor. In addition, a third, heat resistant window is used to prevent steam from backflowing into the inner optical tube and condensing on the windows comprising the safety chamber.

The above features permit safe monitoring of the temperature inside a pressurized reaction chamber. However, the apparatus is incapable of readily disposing of, or displacing, material which might accumulate on the inner wall of the reaction chamber near the sight hole opening. Both the nitrogen and the steam will tend to freeze molten material around the hole, thus occluding the sight path. In addition, the third heat resistant window is, nevertheless, a relatively fragile element located in a potentially very destructive region of the vessel. If it were to break during operation, the optical sight path could become distorted and there would be no way to safely replace the window without shutting the process down and removing the entire measuring duct.

Another weakness common to both of the above prior patents is that the final portion of the sight hole nearest the reaction chamber consists simply of the hole drilled through the refractory lining of the vessel. Such holes can easily become distorted or damaged by the intense thermal and mechanical stresses which can prevail inside the contemplated reaction chambers. As a result of differences in thermal expansion coefficients, one layer of refractory may shift with respect to another, thus partially or completely blocking the sight path. Rapidly changing temperatures inside the reaction chamber can give rise to spalling of the refractory around the edges of the hole. When pieces of refractory fall off and the hole enlarges, the sight path is much more difficult to purge and keep clear of obstructions.

In summary, the apparatus provided in the prior art are subject to having their optical sight paths blocked either by accumulation of frozen material around the sight hole opening or by distortion of, or damage to, the portion of the refractory hole nearest the reaction chamber.

### Brief Statement of the Invention

Toward overcoming the above impediments to reliable temperature measurement, there is presently provided improvements for a novel system that uses a pyrometer for high temperature measurements inside a reactor vessel.

An object of this invention is to provide an improved temperature monitoring system for hostile environments in which a pyrometer is employed.

Another object is to provide an improved optical access port into harsh, particle laden environments for optical measurement devices requiring a clean sight path for accuracy and reliability.

A further object is to provide a durable optical access port into hostile environments which will not be subject to damage or distortion by the environment.

A still further object is to provide means for periodically clearing a pyrometer's sight path which is subject to becoming occluded.

### SUMMARY OF THE INVENTION

Briefly, the invention concerns means for measuring temperatures of hot gases laden with entrained solids contained inside refractory lined chambers or conduits. It is addressed particularly to chambers wherein the molten fraction of the entrained solids tends to form a layer of molten material on the walls of the chamber or conduit.

The apparatus consists of a pyrometer, such as an infrared ratio pyrometer, sighted into the chamber or conduit through a spool piece containing two sight glasses, a full port line-of-sight safety valve and a refractory metal sight tube. In order to accommodate the sight tube, a hole is drilled through the one or more layers of refractory material comprising the lining of the vessel or conduit. This hole is drilled coaxially with a flanged nozzle connection on the side of the vessel or conduit. The sight tube is inserted through the nozzle connection and hole so that its foremost end is flush with the inner surface of the lined vessel or conduit. The size of the hole in the refractory lining is such that a small annular gap exists between the sight tube and the hole in the lining.

In addition, means are provided for purging the sight glasses, valve and both interior and exterior surfaces of the sight tube with a suitable purge gas, or combination of purge gases, such as nitrogen or a slip stream of cooled and cleaned product synthesis gas. The sight glass spool piece, valve, sight tube, and purge means are all connected to one another and to the above said vessel nozzle in such a manner as to ensure the pressure integrity of the vessel containing the hot gases. All components of the system are maintained in precise optical alignment by the flange rings, a pyrometer alignment ring and a sight tube centering ring.

In addition to the above combination of elements, a control system is provided that not only monitors all flows and pressures within the purge system, but also provides a means to dynamically regulate the purge streams and pulses in response to changing conditions with the chamber or conduit. A primary aspect of this invention is that purge gas flow rates and pulses can be controlled in such a way as to not only keep the sight path clear, but also to open it up again if it has become occluded as the result of difficult operating conditions within the chamber or conduit.

A safety system is also provided and consists of a means to monitor the integrity of both sight glasses, as well as a means to take remedial action in the unlikely event that one or both of the sight glasses fails.

### DESCRIPTION OF THE DRAWINGS

The foregoing, as well as other objects and benefits of the invention, will be more fully described below in connection with the best mode contemplated by the inventors of carrying out the invention, and in connection with which there is an illustration provided in the drawing, wherein:
Figure 1 is a schematic cross-section illustrating a combination of the elements included in the invention; and,
Figure 2 is a cross-section taken along line 2-2 in Figure 1.

### DETAILED DESCRIPTION OF THE PREFERRED EMBODIMENT

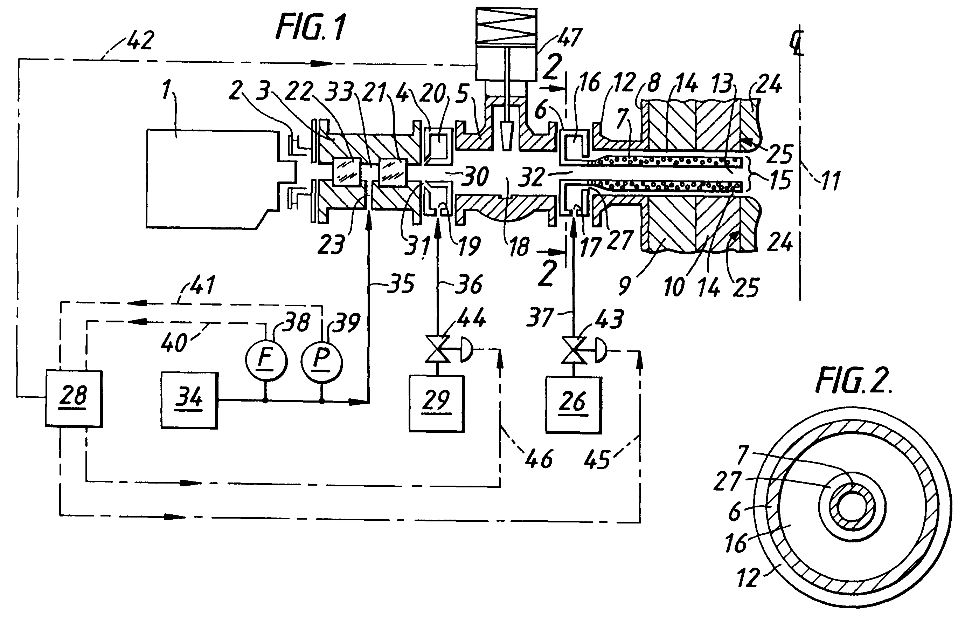

As indicated above, the temperature inside vessels or conduits containing hot, solids laden gases and a layer of molten material on the walls can be measured using a pyrometer. In such a case, not only must the pyrometer be protected but the sight path into the vessel must be maintained straight, clear and free from all occludions. Therefore, a system of elements like those illustrated in Figure 1 is required.

Figure 1 shows a portion the vertical wall of a refractory lined vessel or conduit **8** in which a layer of molten material **24** develops on the innermost surface **25** of the lining. A pyrometer **1**, attached to vessel **8** via flanged nozzle **12** and several of the other elements of the system, receives radiation from the interior **11** of vessel **8** through sight hole **15** formed by the interior of nozzle **12** and a coaxially aligned hole drilled through refractory layers **9** and **10**. Inserted through the sight hole **15** and flush with the most interior surface **25** of the refractory layers is a sight tube **7** which is made from a refractory metal, such as an alloy of molybdenum having a high recrystallization temperature.

The sight tube **7** extends through all layers of the refractory lining of the vessel and connects to a sight tube centering ring **6** which is co-axially affixed to the flanged vessel nozzle **12**. The sight tube centering ring **6** is constructed like a hollow doughnut, having a smaller, doughnut-shaped internal passage **16** which communicates with a side entry port **17** for connection to a supply of purge gas **26**, such as nitrogen, via line **37**. The internal passage **16** also communicates with the annular space **14** formed between the sight hole **15** and the sight tube **7** via several hole **27** which are equally spaced around the circumference of the centering ring. The space formed by the purge gas source **26**, the side entry connecting port **17**, the internal passage **16**, the holes **27** and the annular space **14** provides a passage called the secondary purge stream, which provides a means for maintaining either a continuous or an intermittent flow of purge gas over the external surface of the sight tube **7**. This secondary purge stream also doubles as an inert gas blanket which is used to protect the molybdenum alloy sight tube **7** in the case where it may be exposed to an oxidizing atmosphere. The supply of purge gas **26** is maintained at a pressure 69 kPa to 6.9 MPa (10 to 1000 psi) higher, but preferably 690 kPa to 3.45 MPa (100 to 500 psi) higher, than the pressure in the interior **11** of vessel **8**; and the flow rate of purge gas is controlled by valve **43**.

Connected to the sight tube centering ring **6** is a valve **5** which can close very rapidly in case of an emergency. It is understood that the valve **5** is constructed in such a way that, when the valve is in the open position, the interior space **18** provides no obstruction to the optical sight path between the interior of the vessel **11** and the pyrometer **1**. The actuator **47** of valve **5** is sized so that it can close the valve even if full differential pressure exists between the interior and the outside of the vessel. Closing of the valve **5** can be initiated either manually or by a control system **28** which supervises and controls the performance of the entire system.

The other side of the valve **5** is connected to a primary purge ring **4** which is in turn connected to a double sight glass spool piece **3**. The double sight glass spool piece contains two high pressure sight glasses **21** and **22** which serve to pass thermal radiation from the vessel interior **11** to the pyrometer **1** while at the same time maintaining the pressure integrity of the vessel **8**. The two sight glasses **21** and **22**, the spool piece **3**, the primary purge ring **4**, the valve **5** and the sight tube centering ring **6** are all constructed, both separately and as a unit, to be able to withstand the high pressures which may be found inside vessel **8**. The sight glasses **21** and **22** themselves may be constructed from any suitable material, such as quartz or sapphire, which has high transmissivity in the appropriate spectral region, as well as the necessary mechanical properties.

Similar to the sight tube centering ring **6**, the primary purge ring **4** is constructed like a hollow doughnut, having a smaller, doughnut-shaped internal passage **20** which communicates with a side entry port **19** for connection to a supply of purge gas **29**, such as nitrogen, via line **36**. It should be noted that the source of gas **29** may be the same as the source of gas **26** for the sight tube centering ring **6**; but it does not have to be. The supply of purge gas **29** is maintained at a pressure 69 kPa to 6.9 MPa (10 to 1000 psi) higher, but preferably 690 kPa to 3.45 MPa (100 to 500 psi) higher, than the pressure in the interior **11** of vessel **8**; and the flow rate of purge gas is controlled by valve **44**.

The internal passage **20** of the primary purge ring **4** also communicates with the cylindrical space **30** formed along the cylindrical axis of the doughnut-shaped purge ring **4** via several equally spaced holes **31**. These holes are oriented circumferentially around the purge ring and at an angle with respect to the interior face of the primary sight glass **21**.

The space formed by the purge gas source **29**, the side entry connecting port **19**, the doughnut-shaped internal passage **20**, the circumferentially oriented holes **31**, the cylindrical space **30** in the interior of the primary purge ring **4** and the interior spaces of the valve **5**, the sight tube centering ring **6** and the sight tube **7**, provides a purge gas flow passage, called the primary purge stream, which performs at least two functions. First, the interior face of the primary sight glass **21** is kept cool and optically clean by the sweeping action of the gas as it flows from the holes **31** over the face of the sight glass **21** and then into the space **30** in the interior of the primary purge ring **4**. Second, the interior of the sight tube **7** and the sight tube opening **13** are purged and kept open and free of occlusions by the purging action of the gas flowing through the optical passage originating at the interior face of the primary sight glass **21** and continuing through the cylindrical space **30**, the interior space **18** of valve **5**, the interior space **32** of the sight tube centering ring **6**, the interior of the sight tube **7** and the sight tube opening **13**. The flow of purge gas in these spaces can be either continuous or intermittent as will be explained later.

Purge gas exiting both openings **13** and **14** enters vessel interior **11** and mixes with the reaction gases.

The double sight glass spool piece **3**, the primary purge ring **4**, the valve **5** and the sight tube centering ring **6** are all fitted on each end with ring joint type flanged fittings which tend to automatically align all these elements coaxially with each other. The sight tube **7** is constructed so that it is also coaxially aligned with the above mentioned elements. The pyrometer **1** is attached to and held in precise optical alignment with the rest of the elements in the system by an optical alignment ring **2** which is also fitted with a ring joint type flanged fitting for connection to the exterior end of the double sight glass spool piece **6**. Optical alignment of the pyrometer **1** is accomplished by turning adjustment screws on the optical alignment ring **2**.

Thus, the optical sight path from the pyrometer **1** to the interior **11** of vessel **8** originates at the objective lens of the pyrometer and passes through the optical alignment ring **2**, the two coaxially aligned high pressure sight glasses **21** and **22** of the double sight glass spool piece **3**, the cylindrical space **30** of the interior of the primary purge ring **4**, the interior space **18** of the valve **5**, the cylindrical space **32** of the interior of the sight tube centering ring **6**, the cylindrical interior of the sight tube **7**, and the sight tube opening **13**.

In addition to the combination of elements described above, and the means provided for purging both the optical sight path and the exterior cylindrical surface of the sight tube **7**, the system claimed herein provides means to safely isolate the pyrometer **1** and sight glasses **21** and **22** from the vessel **8** in case of an emergency.

In brief, the safety system consists of a means to monitor the condition of both sight glasses as well as a means to take remedial action in the unlikely event that one or both of the sight glasses fails.

The primary element of the safety system is the double sight glass spool piece **3**. Referring to Figure 1, it can be seen that the primary sight glass **21** and the secondary sight glass **22** are separated by a small, sealed, gas-tight space **33** which communicates with a side entry port **23** for connection to a high pressure source of gas **34** via line **35**. The source of gas **34** may be the same as the gas sources **29** and/or **26**, but need not be. In general, however, the gas from source **34** will be an inert gas. The pressure of gas source **34** is controlled in such a way that it is always at a pressure 69 kPa to 3.45 MPa (10 to 500 psi) higher, and preferably 690 kPa to 1.38 MPa (100 to 200 psi) higher, than the pressure in the interior **11** of vessel **8**. Normally, there is no flow of gas in line **35** because that line terminates in the sealed, gas-tight space **33** between sight glasses **21** and **22**. However, if one or both of the sight glasses and were to fail and begin to leak gas, flow sensor **38** would detect a flow greater than zero in line **35**, and pressure sensor **39** would detect a pressure decrease from the set pressure. In such an instance, sensors **38** and **39** would send signals via signal lines **40** and **41** respectively to control system **28**. Upon receiving a signal from either line **40** or line **41**, or from both, control system **28** causes valve **5** to close via line **42**.

If a sight glass were to fail, the safety system also provides a means to determine which one has failed. If the primary sight glass **21** has failed, the pressure in line **35**, as detected by pressure sensor **39**, will decrease by no more than the difference between the pressure of source **34** and the pressure in vessel interior **11**. However, if the secondary sight glass **22** fails, the pressure in line **35** will decrease to a level below the pressure in vessel interior **11**.

It should be noted that even if one or both of the sight glasses fail, none of the contents of vessel **8** will be lost from the vessel, a condition which, if allowed to persist for several seconds, could result in catastrophic damage to the nozzle **12** and vessel **8**. If the primary sight glass **21** fails, gas from source **34**, which is at a pressure higher than that inside the vessel **8**, will begin to flow through line **35**, through the failed primary sight glass **21** into the purged optical sight path and into the vessel interior **11**. This flow condition lasts only for the short period of time, on the order of a fraction of a second, that it takes for sensors **38** and **39** to detect the fault and signal control system **28** to close valve **5**.

Alternately, if the secondary sight glass **22** fails, gas from source **34**, will begin to flow through line **35**, through the failed secondary sight glass **22**, into the optical alignment ring **2** and out into the ambient environment. Again, valve **5** closes quickly when the sensors **38** and **39** detect the change in line **35** and activate control system **28**.

### OPERATION

A most important aspect of this invention, however, is the means whereby the various purge gas streams are controlled in order to maintain a clear optical sight path into a vessel containing hot, particle laden gases and having a layer of molten material which tends to run down the vertical wall of the vessel into the opening of the sight tube.

Referring again to Figure 1, in a vessel having molten material **24** on its walls **25** and containing molten and solid particles in the gas, both solid particles and molten material will tend to enter the sight tube opening **13** causing it to become obstructed and causing the optical sight path to the pyrometer **1** to become occluded. The group of elements comprised of the purge gas supply **29**, the control valve **44**, the supply line **36**, the primary purge ring **4** and the open spaces **20**, **31**, **30**, **18**, **32**, and **13** is called the primary purge stream. By maintaining a constant stream of gas from source **29** within the primary purge stream, the optical sight path from the interior face of the primary sight glass **21** to the sight tube opening **13** may be kept clean and free of solid and molten particles.

In the case where vessel **8** contains hot gases with few molten particles, a constant primary purge stream is all that is needed to keep the sight tube opening **13** clear and free of occlusions. However, in the case where there are high concentrations of molten particles, and where there is a significant layer of molten material **24** on the inner wall **25** of the vessel **8**, a large deposit of material tends to accumulate over the top of sight tube opening **13** because the cool purge gas creates a cold spot in the wall **25** which lowers the temperature in that area below the melting point of the molten material. Initially this growing accumulation does not significantly occlude the sight tube opening **13** and therefore does not noticeably affect the temperature reading obtained with the pyrometer **1**. Eventually, however, the accumulation grows to the point where it begins to sag under its own weight and begins to droop down over the sight hole creating a significant occlusion and dramatically affecting the temperature reading.

The means provided by this system of elements to remedy the problem just described consists of two steps: first, the accumulated material is allowed to reheat so that it begins to become molten again; and second, the accumulation is forced, or blown, out of the way and into the vessel interior **11** by a high volume impulse of high pressure purge gas directed at the accumulation along the optical sight path as well as through the annular space **14**.

The detailed process of clearing an occlusion is as follows: When an occlusion occurs as a result of a growing accumulation of material, the occlusion can be detected by a steady decrease in the pyrometer temperature reading. When this happens, control system **28** closes valves **5** and **43** via lines **42** and **45** respectively. This action stops the flow of purge gas in both the primary purge stream, i.e. the optical sight path, as well as in the secondary purge stream, i.e. the annular space **14**. It also momentarily interrupts the temperature reading; however, if two identical systems are used on the same vessel, one system can always be measuring temperature while the other one is executing this impulse procedure. Note also that valve **5** is closed, rather than valve **44**, in order to protect the primary sight glass **21** while the primary purge stream is stopped.

With both valves **5** and **43** closed and both purge streams stopped, the cold spot in the wall **25** disappears and the accumulation of material begins to become molten again. At the same time, the pressures of purge gas sources **26** and **29** are increased in order to fill supply lines **36** and **37** with large volumes of purge gas for the next step.

After an appropriate amount of time has elapsed, normally between 1 and 60 minutes, but preferably 1 to 15 minutes, control system **28** quickly opens valves **5**, **43** and **44** wide open via lines **42**, **45** and **46** respectively. This high volume flow of gas is maintained for a period of time normally lasting from 1 to 60 seconds, but preferably from 5 to 15 seconds. The pyrometer reading returns to its previous value during this period as the occlusion is blown away. Following this period, control system **28** readjusts the valve positions of valves **43** and **44** to their previous operating positions, and lowers the pressures of gas sources **26** and **29** to their normal levels.

It is understood that modifications and variations of the invention can be made without departing from the scope of the appended claims.

## Claims

1. A reactor for reacting a hydrocarbonaceous mixture in the reactor's reaction chamber to produce a synthetic gas and particulate matter, said reactor having an internal wall (8), a refractor lining (9,10) about the reaction chamber, and a borehole (15) traversing said lining from a port in the reactor wall and opening into the reaction chamber, and
a removable sight tube assembly positioned in said borehole (15) to afford visual access to the reaction chamber to conduct radiation therefrom, the removable sight tube assembly comprising an elongated tubular element (7) defining an internal cylindrical sighting passage having a face and an inner open end, and an outer open end, said elongated tubular element (7) being longitudinally registered in said borehole (7),
a first toroidal manifold (6) attached to said outer open end of said elongated tubular element (7) and having an inlet (17) communicating with a pressurized source (26) of a purge gas, and at least one discharge port (27),
a shut-off valve (5) having an inlet attached to said manifold (6), which, when open, affords straight line-of-sight visual access through the valve and the elongated tubular element, and having an outer end,
a second toroidal manifold (4) attached to said outer end of said valve (5) and having an inlet (19) communicable with a pressurized source (29) of purge gas, and at least one discharge port (31) communicated with an axial space (30) enclosed by the second toroidal manifold, said axially enclosed space (30) being immediately contiguous with the interior space of the shut-off valve (5) which, in turn, is in connection with an internal cylindrical gas passage defined by the tubular element (7), and
a spool piece (3) containing two coaxially aligned sight glasses (21,22) attached to the second toroidal manifold (4) and, in cooperation with the second toroidal manifold (4), the shut-off valve (5), the first toroidal manifold (6), the tubular element (7), the various gas sources (26,29) and supply lines and the reactor, forming a gas tight enclosure,
said spool piece (3) including a small, sealed, gas-tight enclosure (33) between said two coaxially aligned sight glasses (21,22) where said enclosure has an inlet (23) communicable with a pressurized source (34) of a gas,
characterized in that
said elongated tubular element (7) is positioned in said borehole (15) to define an annular purge gas passage (14) between said tubular element (7) and said borehole (15), whereby the discharge port (27) of the first toroidal manifold (6) is communicated with said annular purge gas passage (14),
the face at the inner open end of the elongated tubular element (7) lies in a plane common with the reaction chamber wall (25),
and the removable sight tube assembly comprises an optical alignment element (2) connected to the remote end of said spool piece (3) providing a means for attaching and optically aligning a pyrometer (1) or any other such radiation receiving device for the purpose of measuring the radiation emitted by the gaseous and particulate material contained within the reactor.

2. Apparatus as defined in Claim 1, wherein said tubular element (7), said internal cylindrical purge gas passage and said annular purge gas passage (14) are substantially uniform in cross-sectional area in a plane normal to the longitudinal axis of said tubular element.

3. Apparatus as defined in Claim 1 or Claim 2 wherein said tubular element (7) is fabricated from a material characterized by high temperature strength and high recrystallization temperature,
and wherein said tubular element (7) with high temperature strength is able to withstand, without distortion, shear forces which may be placed upon it by shifting layers of the refractory lining inside the vessel,
and wherein said tubular element (7) is resistant to thermal stresses resulting in spalling and deterioration.

4. Apparatus as defined in any one of Claims 1 to 3, wherein the combination of elements are connected in such a way as to provide a removable, straight, unobstructed optical sight path extending from the interior surface (25) of said reaction chamber to the attached radiation receiving device (1), when said shut-off valve (5) is in its normal open position.

5. Apparatus as defined in any one of Claims 1 - 4, wherein the first toroidal manifold (6), the second toroidal manifold (4) and the double sight glass spool piece (3) are all connected to sources (26,29,34) of gas at pressures higher than the pressure within the reaction chamber.

6. Apparatus as defined in Claim 5, wherein means (28,43-46) are provided for independently controlling the respective pressure and flow rates of purge gas entering the internal passages of the first and second toroidal manifolds (4,6).

7. Apparatus as defined in Claim 6, wherein the purge gas is an inert gas.

8. Apparatus as defined in Claim 6, wherein the purge gas is a process gas such as recycled gas from the reactor.

9. Apparatus as defined in any one of Claims 5 - 8, wherein sensors (F,P) are provided to detect an increase in pressure and/or the presence of gas flow in the small, sealed, gas-tight enclosure (33) between the two sight glasses (21,22) in the spool piece (3) and to automatically activate the shut-off valve (5) to close.

10. Apparatus as defined in any of Claims 1 - 9, wherein both the cylindrical sighting passage in said tubular element (7) and the annular space (14) exterior to the tubular element are purged simultaneously and continuously in order to prevent particles from entering into the tubular element and occluding the sight path.

11. Apparatus as defined in Claim 3 wherein said tubular element (7) is made of molybdenum alloy.

## Patentansprüche

1. Ein Reaktor zum Umwandeln einer Mischung aus Kohlenwasserstoffen in der Reaktionskammer des Reaktors zur Erzeugung eines synthetischen Gases und von partikulären Stoffen, wobei der Reaktor eine Innenwandung (8), eine feuerfeste Verkleidung (9, 10) um die Reaktorkammer und eine die Verkleidung querende Bohrung (15) von einem Anschluß in der Reaktorwandung, die sich in die Reaktorwandung öffnet, und
eine entfernbare Sichtrohranordnung, die in der Bohrung (15) angeordnet ist, um einen visuellen Zugang zu der Reaktionskammer zum Herausführen von Strahlung aus dieser zu ermöglichen, positioniert ist, wobei die entfernbare Sichtrohranordnung ein längliches Rohrelement (7), welches eine innere zylindrische Sichtpassage mit einer Fläche und einem inneren offenen Ende und einem äußeren offenen Ende definiert, wobei das längliche rohrförmige Element (7) longitudinal in der Bohrung (7) ausgerichtet ist, aufweist,
einen ersten toroidalen Ringverteiler (6), der an dem äußeren offenen Ende des länglichen Rohrelements (7) angebracht ist und einen Einlaß (17), der mit einer Druckquelle (27) eines Reinigungsgases und wenigstens einem Auslaßanschluß (27), einem Abschaltventil (5) mit einem Einlaß, der mit dem Ringverteiler (6) verbunden ist, welches bei Öffnung einer gestreckten Sichtlinie für einen visuellen Zugang durch das Ventil und das längliche Rohrelement erlaubt und ein äußeres Ende hat,
einen zweiten toroidalen Ringverteiler (4), der an dem äußeren Ende des Ventils (5) angeordnet ist und einen Einlaß (19) hat, der mit einer Druckquelle (29) eines Reinigungsgases verbunden werden kann und wenigstens einen Ablaßanschluß (31), der mit einem axialen Raum (30), der durch den zweiten toroidalen Ringverteiler umschlossen ist, kommuniziert, hat, wobei der axiale umschlossene Raum (30) unmittelbar dem Innenraum des Abschaltventils (5) benachbart ist, das wiederum in Verbindung mit einer inneren zylindrischen Gaspassage, die durch das Rohrelement (7) definiert ist, in Verbindung ist, und ein Spulenstück (3), das zwei koaxial ausgerichtete Sichtgläser (21, 22) hat, die an den zweiten toroidalen Ringverteiler (4) angesetzt sind und in Zusammenwirken mit dem zweiten toroidalen Ringverteiler (4), dem Abschaltventil (5), dem ersten toroidalen Ringverteiler (6), dem rohrförmigen Element (7), den verschiedenen Gasquellen (26, 29) und den Zufuhrleitungen und dem Reaktor eine gasdichte Einschließung bilden,
wobei das Spulenstück (3) eine kleine, versiegelte, gasdichte Einschließung (33) zwischen den beiden koaxial ausgerichteten Sichtgläsern (21, 22) aufweist und die Einschließung einen Einlaß (23) hat, der mit einer Druckquelle (34) für ein Gas kommunizieren kann,
hat,
dadurch gekennzeichnet, daß
das längliche Rohrelement (17) in der Bohrung (15) positioniert ist, um eine ringförmige Reinigungsgaspassage (14) zwischen dem rohrförmigen Element und der Bohrung (15) zu bilden, wodurch der Ablaßanschluß (27) des ersten totoidalen Ringverteilers (6) mit der ringförmigen Reinigungsgaspassage (14) kommuniziert,
die Fläche an dem offenen Ende des länglichen Rohrelements (7) in einer mit der Reaktionskammerwandung (25) auf gemeinsamer Ebene liegt, und
die entfernbare Sichtrohranordnung ein optisches Ausrichtelement (2) aufweist, das mit dem entfernten Ende des Spulenstücks (3) unter Bildung eines Mittels zur Anbringung und zur optischen Ausrichtung eines Pyrometers (1) oder eines anderen einer derartigen strahlungsaufnehmenden Einrichtung für den Zweck der Messung der Strahlung, die durch die gasförmige und partikulären Materialien, die in dem Reaktor enthalten sind, emittiert werden, verbunden ist.

2. Vorrichtung nach Anspruch 1, wobei das rohrförmige Element (7), die interne zylindrische Reinigungsgaspassage und die ringförmige Reinigungsgaspassage (14) im Querschnitt in einer Ebene normal zu der Längsachse des rohrförmigen Elements im wesentlichen gleichförmig sind.

3. Vorrichtung nach Anspruch 1 oder Anspruch 2, wobei das rohrförmige Element aus einem Material hergestellt ist, das durch eine hohe Temperaturfestigkeit und eine hohe Rekristallisationstemperatur gekennzeichnet ist,
und wobei das rohrförmige Element (7) mit einer hohen Temperaturfestigkeit in der Lage ist, ohne Zerstörung Scherkräften zu widerstehen, die auf dieses durch Verschiebung von Schichten der feuerfesten Verkleidung im Inneren des Kessels auf diese aufgebracht werden können,
und wobei das rohrförmige Element (7) gegenüber thermischen Belastungen die zu einem Abspalten und einer Zerstörung führen, widerstandsfähig ist.

4. Vorrichtung nach einem der Ansprüche 1 bis 3, wobei die Kombination der Elemente derart verbunden sind, daß ein entfernbarer, gestreckter, ungestörter optischer Sichtweg, der sich von der Innenfläche (25) der Reaktionskammer zu der angebrachten eine Strahlung aufnehmende Einrichtung (1) verläuft, bildet, wenn das Abschaltventil (5) in seiner normalen offenen Position ist.

5. Vorrichtung nach einem der Ansprüche 1 bis 4, wobei der erste toroidale Ringverteiler (6), der zweite toroidale Ringverteiler (4) und das Doppelsichtglas-Spulenstück (3) alle mit Gasquellen (26, 29, 34) unter einem Druck, der höher als der Druck in der Reaktionskammer ist, verbunden sind.

6. Vorrichtung nach Anspruch 5, wobei Mittel (28, 43 - 46) vorgesehen sind, um die jeweiligen Druck- und Flußraten des in die internen Passagen der ersten und zweiten toroidalen Ringverteiler (4, 6) eindringenden Reinigungsgases unabhängig voneinander zu steuern.

7. Vorrichtung nach Anspruch 6, wobei das Reinigungsgas ein Inertgas ist.

8. Vorrichtung nach Anspruch 6, wobei das Reinigungsgas ein Prozeßgas ist, etwa ein aus dem Reaktor rückgeführtes Gas.

9. Vorrichtung nach einem der Ansprüche 5 bis 8, wobei Sensoren (F, P) vorgesehen sind, um einen Anstieg des Drucks und/oder das Vorhandensein eines Gasstromes in dem kleinen, abgedichteten, gasdichten Raum (33) zwischen den beiden Sichtgläsern (21, 22) in dem Spulenstück (3) zu erkennen und um automatisch das Abschaltventil (5) zum Schließen, zu aktivieren.

10. Vorrichtung nach einem der Ansprüche 1 bis 9, wobei sowohl die zylindrische Sichtpassage in dem rohrförmigen Element (7) und der rohrförmige Abstand (14) außerhalb des rohrförmigen Elements gleichzeitig und kontinuierlich gereinigt werden, um Partikel daran zu hindern, in das rohrförmige Element einzudringen und den Sichtweg zu verschließen.

11. Vorrichtung nach Anspruch 3, wobei das rohrförmige Element (7) aus einer Molybdänlegierung gefertigt ist.

## Revendications

1. Un réacteur pour faire réagir un mélange hydrocarboné dans la chambre de réaction du réacteur pour produire un gaz synthétique et une matière particulaire, ledit réacteur présentant une paroi interne (8), un revêtement féfractaire (9, 10) tout autour de la chambre de réaction, et un orifice perforé (15) qui traverse ledit revêtement à partir d'un orifice dans la paroi du réacteur et qui débouche dans la chambre de réaction, et un assemblage formant tube de visée amovible positionné dans ledit orifice perforé (15) pour permettre un accès visuel à la chambre de réaction pour conduire un rayonnement à partir de celle-ci, l'assemblage formant tube de visée comprenant un élément tubulaire allongé (7) quie définit un passage de visée cylindrique interne quie présente une face et une extrémité intérieure ouverte et une extrémité extérieure ouverte, ledit élément tubulaire allongé (7) étant longitudinalement à fleur dans ledit orifice perforé (15), un premier distributeur toroïdal (6) attaché à ledite extrémité extérieure ouverte dudit élément tubulaire allongé (7) et présentant un orifice d'entrée (17) qui communique avec une source sous pression (26) d'un gaz de purge, et au moins un orifice d'échappement (27), une vanne d'arrêt (5) présentant un orifice d'entrée, attachée audit distributeur (6), qui, une fois ouverte, permet un accès visuel en ligne de visée droite à travers la vanne et l'élément tubulaire allongé et présentant une extrémité extérieure, un second distributeur toroïdal (4) attaché à ladite extrémité extérieure de ladite vanne (5), et présentant un orifice d'entrée (19) qui peut être mis en communication avec une source sous pression (29) de gaz de purge, et au moins un orifice d'échappement (31) qui est relié à un espace axial (30) entouré par le second distributeur toroïdal, ledit espace axialement enfermé (30) étant immédiatemment contigu à l'espace intérieur de la vanne d'arrêt (5) qui, à son tour, est en liaison aven un passage de gaz cylindrique interne défini par l'élément tubulaire (7), et une pièce en forme de bobine (3) qui contient deux vitres de visée alignées de façon coaxiale (21,22), attachées au second distributeur toroïdal (4) et qui, en coopération avec le second distributeur toroïdal (4), la vanne d'arrêt (5), le premier distributeur toroïdal (6), l'élément tubulaire (7), les différentes sources de gaz (26, 29) et les conduites d'alimentation et le réacteur, forment une enceinte étanche au gaz, ladite pièce en forme de bobine (3) comportant une petite enceinte (33) scellée, étanche au gaz entre lesdites deux vitres de visée alignées de façon coaxiale (21,22) où ladite enceinte présente un orifice d'entrée (23) qui peut être mis en communication avec une source sous pression (34) d'un gaz, caractérisé en ce que ledit élément tubulaire allongé (7) est positionné dans ledit orifice perforé (15) pour définir un passage annulaire (14) de gaz de purge entre ledit élément tubulaire (7) et ledit orifice perforé (15), l'orifice d'entrée (27) du premier distributeur toroïdal (6) étant ainsi en communication avec ledit passage annulaire (14) de gaz de purge, la face à l'extrémité intérieure ouverte de l'élément tubulaire allongé (7) est située dans un plan commun avec la paroi (25) de la chambre de réaction, et l'assemblage formant tube de visée amovible comprend un élément d'alignement optique (2) connecté à l'extrémité éloignée de ladite pièce en forme de bobine (3), fournissant un moyen d'attacher et d'aligner optiquement un pyromètre (1) ou n'importe quel autre appareil de ce type de réception de rayonnement dans le but de mesurer le rayonnement émis par la matière gazeuse et particulaire contenue à l'intérieur du réacteur.

2. Un dispositif tel que défini dans la revendication 1, caracterisé en ce que ledit élément tubulaire (7), ledit passage cylindrique interne de gaz de purge et ledit passage annulaire de gaz de purge (14) ont une section trasversale de surface substantiellement uniforme dans un plan perpendiculaire à l'axe longitudinal dudit élément tubulaire.

3. Un dispositif tel que défini dans la revendication 1 ou dans la revendication 2, ledit élément tubulaire (7) est fabriqué d'un matériau caractérisé par une résistance aux températures élevées et une haute température de recristallisation, et caracterisé en ce que ledit élément tubulaire (7) résistant aux températures élevées est capable de résisteur, sans se déformer, aux forces de cisaillement qui peuvent être exercées sur lui par des couches en mouvement du revêtement réfractaire à l'intérieur du récipient, et caracterisé en ce que ledit élément tubulaire (7) est résistant aux contraintes thermiques qui provoquent l'écaillage et la détérioration.

4. Un dispositif tel que défini dans l'une quelconque des revendications 1 à 3, caracterisé en ce que la combinaison d'éléments sont connectés de façon à fournir un chemin de visée amovible, droit, non-obstrué qui s'étend de la surface intérieure (25) de ladite chambre de réaction jusqu'au dispositif (1) attaché de réception de rayonnement, quand ladite vanne d'arrêt (5) est dans sa position normale ouverte.

5. Un dispositif tel que défini dans l'une quelconque des revendications 1 - 4, caracterisé en ce que le premier distributeur toroïdal (6), le second distributeur toroïdal (4) et la pièce en forme de bobine à double vitre de visée (3) sont tous connectés à des sources (26, 29, 34) de gaz à des pressions supérieures à la pression régnant à l'intérieur de la chambre de réaction.

6. Un dispositif tel que défini dans la revendication 5, caracterisé en ce que il est prévu des moyens (28, 43-46) pour contrôler indépendamment la pression et les débits de gaz de purge respectives qui pénètrent dans les passages internes des premier et second distributeurs toroïdaux (4, 6).

7. Un dispositif tel que défini dans la revendication 6, caracterisé en ce que le gaz de purge est un gaz inerte.

8. Un dispositif tel que défini dans la revendication 6, caracterisé en ce que le gaz de purge est un gaz de réaction tel qu'un gaz recyclé du réacteur.

9. Un dispositif tel que défini dans l'une quelconque des revendications 5 - 8, caracterisé en ce que il est prévu des détecteurs (F, P) pour déceler une augmentation de la pression et/ou la présence d'un courant de gaz dans la petite enceinte (33) scellée et étanche au gaz, entre les deux vitres (21, 22) de visée dans la pièce en forme de bobine (3) et pour actionner automatiquement la vanne d'arrêt (5) pour fermer.

10. Un dispositif tel que défini dans l'une quelconque des revendications 1 - 9, caracterisé en ce que à la fois le passage de visée cylindrique dans ledit élément tubulaire (7) et l'espace annulaire (4) extérieur à l'élément tubulaire sont simultanément et continuellement purgés dans le but d'empêcher des particules de pénétrer à l'intérieur de l'élément tubulaire et d'obstruer le chemin de visée.

11. Un dispositif tel que défini dans la revendication 3 caracterisé en ce que ledit élément tubulaire (7) est fait d'un alliage de molybdène.
